Europäisches Patentamt

European Patent Office

Office européen des brevets

(11) Publication number: **0 096 529**
**A1**

(12) **EUROPEAN PATENT APPLICATION**

(21) Application number: 83303127.1

(22) Date of filing: 01.06.83

(51) Int. Cl.³: **H 01 Q 15/00**

(30) Priority: 01.06.82 GB 8215820

(43) Date of publication of application:
21.12.83 Bulletin 83/51

(84) Designated Contracting States:
DE FR GB IT SE

(71) Applicant: Kent Scientific Industrial Projects Limited
The Physics Laboratory The University Canterbury
Canterbury Kent CT2 7NR(GB)

(72) Inventor: Parker, Edward Andrew
75 Whitstable Road
Canterbury Kent(GB)

(72) Inventor: Langley, Richard Jonathan
17 Richmond Gardens
Canterbury Kent(GB)

(74) Representative: Sturt, Clifford Mark et al,
MARKS & CLERK 57-60 Lincoln's Inn Fields
London WC2A 3LS(GB)

(54) Dichroic plate.

(57) Dichroic plate comprising a regular grid (10) and a respective element (12) within each interstice of the grid (10), the elements (12) being identical and of substantially non-reentrant shape.

A preferred shape for the elements (12) is a hollow square. Improvements relating to ease of design, proximity and stability of reflection and transmission bands and mitigation of cross polarization phenomena can be achieved.

FIG.1.

EP 0 096 529 A1

DICHROIC PLATE

The present invention relates to dichroic plates.

A dichroic plate is used to reflect signals in one frequency band and to pass signals in another frequency band. Such devices are known and an example is described in US Patent 4160254. That patent dicloses a system having an array of elements which are interlaced with each other. The purpose of the interlacing is to reduce energy losses and to increase the band width of signals which are passed by the plate. The design of most known dichroic plates is directed to these problems.

It is believed that other systems have been proposed in which a grid of conductors is employed and in which each element is located within the interstices of the grid. The elements are cross-shaped conductors which extend almost to the boundaries of the interstices. Provision of the grid assits in reduction of energy losses.

In contrast, other operating parameters of dichroic plates and the ease of design of dichroic plates have not undergone significant improvement.

The present invention has as its general object enhancement of operating parameters of dichroic plates and also aims to facilitate application design of dichroic plates.

According to the present invention there is provided a dichroic plate comprising a regular grid and a respective element within each interstice of the grid, the elements being identical characterised in that the elements are of substantially non-re-entrant shape.

The elements are of substantially non-re-entrant form. It is envisaged that the elements may embody minor re-entrant sections at the edges or corners of the elements

It should be noted that the term plate as used in this art is not restricted to a structure within one plane. The plate will often be deformed into a dish shape associated, for example, with a dish shaped antenna.

Preferred non-re-entrant shapes for the elements are rectangles and ellipses. The special cases of squares and circles are particularly beneficial.

The shape of the elements may be solid or hollow.

A number of advantages accrue from the use of the grid and non-re-entrant shaped elements.  These advantages are described in relation to the embodiments disclosed hereinafter although the underlying theory of the associated phenomena are not yet fully explained.

The grid and elements may be in the form of conductors but Babinet compliments of these arrangements are encomposed by the invention.

Embodiments of the present invention will now be described by way of example only and with reference to the accompanying drawings, in which;

Figure 1 illustrates the arrangement of a dichroic plate in accordance with this invention,

Figure 2 is a graph of transmission loss verses frequency for the dichroic plate of Figure 1,

Figure 3 illustrates two alternative forms of elements which may replace those shown in Figure 1,

Figure 4 is a schamatic illustration of one use of the plate of Figure 1, and

Figure 5 is a schamatic illustration of a further use of the plate of Figure 1.

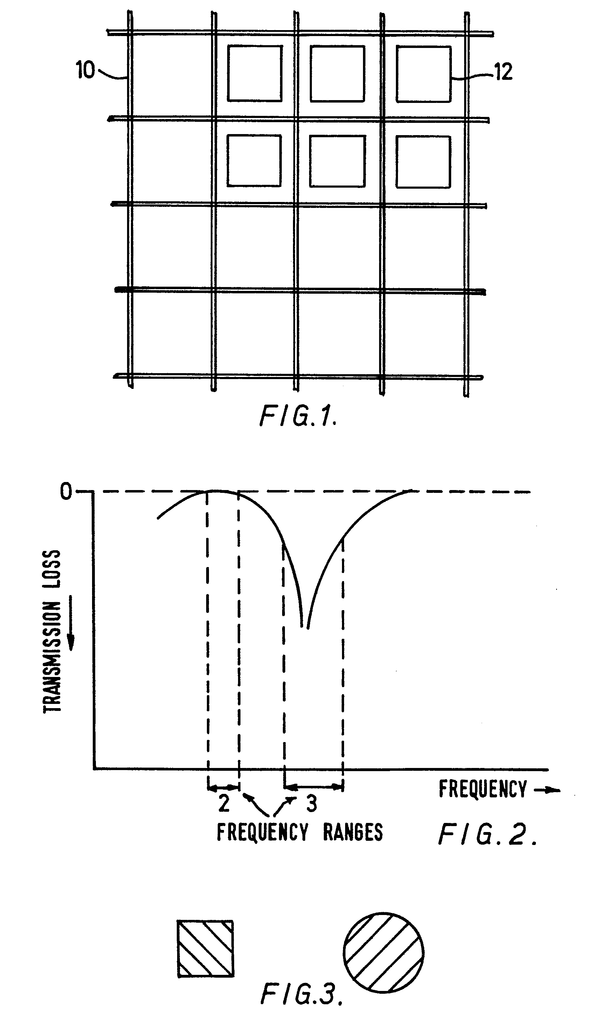

Figure 1 illustrates a dichroic plate having a
regular grid 10 formed by a number of thin conductors
which are laid in rows and columns. Each of the square
interstices of the grid 10 has a respective element 12.
The elements 12 are identical hollows squares which are
formed of conductors which may or may not be the same
size as the conductors forming group 10.

The lengths of the side of the square elements 12
are found to control the cut-off frequency of the
plate. The cut-off frequency of the plate is that
frequecny which is the turning point between singals
that are passed by the plate and signals that are
reflected by the plate.

The provision of the grid 10 is believed to control
the pass band and enhance stability of the reflected and
passed frequency bands with respect to change in angle
of incidence of the signals with respect to the plate.
The provision of the square elements 12 in the
interstices of the grid 10 is found to enhance
remarkably the stability of the frequency bands.

A benefit of the arrangement shown in figure 1 is
that the mutual coupling between the elements 12 and
grid 10 effects the relative proximity of the frequency
bands of passed and reflected signals. By varying the spacing between the elements 12 and grid 10 it has been found possible to accurately control the frequency spacing of the frequency bands.

A plot of transmission loss verses frequency for the dichroic plate of Figure 1 is shown in Figure 2. Frequency band 2 is a transmission band and frequency band 3 is a reflection band. It will be appreciated that the transmission band is lower than the reflection band in frequency.

Two examples of particular dimensions of the plate illustrated in Figure 1 will now be given together with an indication of the centre of the resulting reflection and transmission frequency bands. The spacing of the conductors of grid 10 is denoted by L1, the length of side of element 12 by L2, the width of the conductors forming the grid 10 by W1, the width of the conductors forming the elements 12 by W2 and the distance between sides of the square elements and the respective parts of the grid by S.

EXAMPLE 1:

L1 = 5.0  mm

L2 = 3.84 mm

W1 = 0.12 mm

W2 = 0.12 mm

S  = 0.52 mm

The centre of the resulting reflection frequency band was 22GHz and the centre of the resulting transmission band was 15.5GHz.

EXAMPLE 2:

L1   5.0  mm

L2   4.28 mm

W1   0.12 mm

W2   0.12 mm

S    0.3  mm

The centre frequency of the resulting reflection band was 18.2GHz and the centre of the resulting transmission band was 14.0GHz.

A major advantage of the arrangement shown in Figure 1 is that an equivalent circuit can be modeled with relative ease.  The availability and ease of establishing equivalent circuits can provide exceptional benefit when compared with the difficulty encountered in designing the known devices for specific applications.

It is believed that a simple equivalent circuit model consisting of an inductance in parallel with the series combination of an inductance and a capacitance can be used to predict the transmission and reflection and frequency bands of the grided square array of Figure 1.

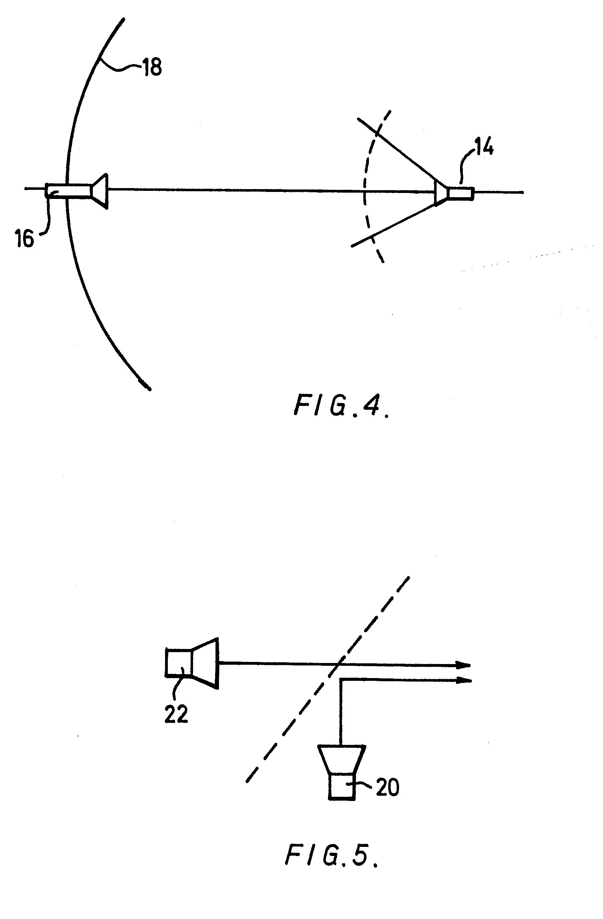

The elements 12 shown in Figure 1 are in the form of hollow squares. Two alternative forms for the elements 12 are shown in Figure 3. These forms are a solid square and a solid circle. The elements can directly replace the elements shown in Figure 1 and similar advantages to those discussed above can be achieved. Slight variations in characteristics of the plate will be noted with such substitution for the elements 12. The small vairations in characteristics may be useful for particular applications.

The use of multiple elements, preferably one inside another, within each interstice of the grid may be particularly advantageous for multi-band applications.

It is also possible for the elements 12 to adopt any other non-re-entrant shape. The elements may be either hollow or solid and can vary in shape between a triangle or an ellipse. Particular shapes of elements may operate best with corresponding shaped grids. For example, if the elements 12 are of triangular shape then the grid 10 may be found to provide optimum results when configured to define triangular shaped interstices. The same is believed to be particularly true for hexagons and octagons.

The width of the conductors of grid 10 are described above as being of comparable width to the conductors defining elements 12 in Figure 1. However, the conductors of grid 10 may be relatively wide with respect to the width of the conductors defining elements 12.

The illustrated and described arrangements will function if the described use of conductors for the grid and elements is replaced with dielectric materials. That is, Babinet compliments of the above described arrangements are encompossed by the present invention.

Figures 4 and 5 of the accompanying drawings illustrate two applications using the dichroic plate of figure 1. In Figure 4 the dichroic plate is used as a secondary mirror and this permits a prime focus feed 14 to be used at frequencies where the plate is transmitting, while a Cassegrain feed 16 in the main reflector 18 is used at frequencies where the plate is reflective.

Figure 5 illustrates the simultaneous use of two feeds 20 and 22 together with the dichroic plate which effectively acts as a diplexer. Feed 20 operates at frequencies for which the plate is reflective whereas feed 22 operates at frequencies for which the plate is transmissive. The device of Figure 5 gives a dual band capability and this could be used instead of the single band feed in a standard reflector antenna. Such operation has been achieved hereto by constructing a frequency selective surface in place of the dichroic plate from stacks of wave guides or arrays of elements such as resonant dipoles.

The applications shown in Figures 4 and 5 can assist in highlighting further advantages of the dichroic plate illustrated in Figure 1. These advangtages are concerned with applications in which multi-banding is required. Such applications have been difficult to implement using the known dichroic plates. A major problem in implementing multi-banding applications is the cross polarization which the known dichroic plates exhibit when several are used together. The cross polarization of the dichroic plate of Figure 1 has been found to be particulary enhanced in comparison with known devices.

Dichroic plates are conventionally used with radio frequency signals and are widely used in micro wave systems.  It is, believed, that the dichroic plate of this invention has applications not only to reflector antennas but also to optical and infra red filters.

CLAIMS

1.  A dichroic plate comprising a regular grid (10) and a respective element (12) within each interstice of the grid (10), the elements (12) being identical charcterised in that the elements (12) are of substantially non-re-entrant shape.

2.  A dichroic plate as claimed in claim 1, charaterised in that the elements (12) are hollow.

3.  A dichroic plate as claimed in claim 1, characterised in that the elements (12) are solid.

4.  A dichroic plate as claimed in any preceding claim, characterised in that the elements (12) are rectangular.

5.  A dichroic plate as claimed in any of claims 1 to 3, characterised in that the elements (12) are elliptical.

6.  A dichroic plate as claimed in claim 4, characterised in that the elements (12) are square.

7.  A dichroic plate as claimed in claim 5, characterised in that the elements (12) are circular.

8.  A dichroic plate as claimed in any preceding claim, characterised in that the grid (10) and the elements (12) are formed of conductors.

9. A dichroic plate as claimed in any of claims 1 to 7, characterised by having the Babinet compliment form of the plate of claim 8.

FIG.1.

FIG.2.

FIG.3.

0096529

FIG.4.

FIG.5.

European Patent
Office

**EUROPEAN SEARCH REPORT**

**0096529**
Application number

EP   83 30 3127

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | ELECTRONICS LETTERS, vol. 18, no. 7, april 1982, pages 294-296, London, GB. R.J. LANGLEY et al.: "Equivalent circuit model for arrays of square loops" * Whole document * | 1,3,4, 6,9 | H 01 Q   15/00 |
| | --- | | |
| X | ELECTRONICS LETTERS, vol. 17, no. 23, 12th November 1981, pages 880-881, London, GB. E.A. PARKER et al.: "Arrays of concentric rings as frequency selective surfaces" * Whole document * | 1,3,5, 7,9 | |
| | --- | | |
| A | US-A-3 842 421 (J.V. ROOTSEY et al.) * Figure 6 * | 1,3,5, 7,8 | |
| | | | TECHNICAL FIELDS SEARCHED (Int. Cl. ³) |
| | --- | | |
| A | US-A-4 017 865 (O. McDONALD WOODWARD) | | H 01 Q |
| | --- | | |
| A | GB-A-2 065 377 (MARCONI) | | |
| | ----- | | |

The present search report has been drawn up for all claims

| Place of search THE HAGUE | Date of completion of the search 03-08-1983 | Examiner CHAIX DE LAVARENE C. |
|---|---|---|